# EUROPEAN PATENT APPLICATION

(11) **EP 4 485 596 A1**
(43) Date of publication of application: **01.01.2025**
(21) Application number: 24180001.0
(22) Date of filing: 04.06.2024
(51) Int. Cl.: H01M 10/04, H01M 10/0587, H01M 50/107, H01M 50/528, H01M 50/533, H01M 50/536, H01M 50/538, H01M 50/559

(54) **SECONDARY BATTERY**

(30) Priority: 27.06.2023 KR 20230082637; 01.12.2023 KR 20230172095
(71) Applicant: Samsung SDI Co., Ltd., Yongin-si, Gyeonggi-do 17084 (KR)
(72) Inventor: YU, Gwan Hyeon, 17084 Yongin-si (KR); JUNG, Hyun Ki, 17084 Yongin-si (KR); KIM, Myung Seob, 17084 Yongin-si (KR); KIM, Mun Sung, 17084 Yongin-si (KR); LEE, Dong Sub, 17084 Yongin-si (KR); YOO, Yoon Sun, 17084 Yongin-si (KR); JUN, Woo Tae, 17084 Yongin-si (KR)
(74) Representative: Marks & Clerk LLP

(57) **Abstract**

A secondary battery includes a case having a cylindrical shape, an electrode assembly in the case, and including a first tab protruding in a first direction at a center portion, and a second tab protruding in the first direction at a perimeter, a first current collector plate in the case and electrically connected to the first tab, a second current collector plate electrically connecting the second tab to the case, and a rivet terminal electrically connected to the first current collector plate, and passing through the case.

## Description

### BACKGROUND

### 1. Field

The present disclosure relates to a secondary battery.

### 2. Description of the Related Art

Unlike a primary battery that cannot be recharged, a secondary battery is a battery that can be charged and discharged. A low-capacity battery, in which one battery cell is packaged in the form of a pack, has been mainly used in small portable electronic devices, such as smartphones and digital cameras. A large-capacity battery, in the form of a module in which dozens or hundreds of battery packs are connected has been used as a power source for driving motors in hybrid vehicles, electric vehicles, or drones, or as an energy storage device.

A rechargeable secondary battery may include an electrode assembly having a separator interposed between a positive electrode plate and a negative electrode plate, a current collector plate electrically connected to the electrode assembly, a terminal electrically connected to the current collector plate, and a case which accommodates the electrode assembly and the current collector plate, and to which the terminal is coupled therethrough.

The above-described information disclosed in the technology that serves as the background of the present disclosure is only for improving understanding of the background of the present disclosure, and thus may include information that does not constitute the related art.

### SUMMARY

The present disclosure provides a secondary battery having a low electrical resistance and a short current path by providing a first tab (e.g., a positive electrode tab) and a second tab (e.g., a negative electrode tab) of an electrode assembly in the same direction to be electrically connected to a first terminal (e.g., a rivet terminal) and a second terminal (e.g., a case).

The present disclosure provides a secondary battery allowing a relatively large electrode assembly to be accommodated inside a case by having a first current collector plate (e.g., a positive electrode current collector plate) and a second current collector plate (e.g., a negative electrode current collector plate) that are three-dimensionally coupled and provided in the same region to occupy a relatively small volume in an inner space of the case.

The present disclosure provides a secondary battery having excellent flatness between a first terminal (e.g., a rivet terminal) and a second terminal (e.g., a case) by providing a conductive ring plate on the second terminal.

A secondary battery according to one or more embodiments of the present disclosure includes: a case having a cylindrical shape; an electrode assembly in (e.g. accommodated in) the case, and including a first tab protruding in a first direction at a center portion thereof, and a second tab protruding in the first direction at a perimeter thereof; a first current collector plate in (e.g. accommodated in) the case and electrically connected to the first tab; a second current collector plate configured to electrically connect the second tab to the case, and a rivet terminal electrically connected to the first current collector plate, and passing through the case.

A planar shape of the first tab may be a circular ring with a center.

The second tab may be spaced apart from the first tab, and may have a planar shape that is a circular ring with a center.

A diameter of the first tab may be less than a diameter of the second tab.

The secondary battery may further include a separator between (e.g. interposed between) the first tab and the second tab.

The first current collector plate may include a first current collector plate first connection region electrically connected to the first tab, a first current collector plate connecting region bent from, and extending in the first direction from, the first current collector plate first connection region, and a first current collector plate second connection region bent from, and extending from, the first current collector plate connecting region to be electrically connected to the rivet terminal.

The first current collector plate connecting region may extend from an inner perimeter of the first current collector plate first connection region.

A planar shape of the first current collector plate second connection region may be triangular.

The second current collector plate may include a second current collector plate first connection region electrically connected to the second tab, a second current collector plate connecting region bent from, and extending in the first direction from, the second current collector plate first connection region, and a second current collector plate second connection region bent from, and extending from, the second current collector plate connecting region to be electrically connected to the case.

A planar shape of the second current collector plate first connection region may be a circular ring with a center.

The second current collector plate connecting region may extend from an outer perimeter of the second current collector plate first connection region.

A planar shape of the second current collector plate second connection region may be a circular ring with a center.

The secondary battery may further include an insulating plate between (e.g. interposed between) the first current collector plate and the second current collector plate.

The secondary battery may further include a conductive ring plate attached to (e.g. to a partial region of) the case at a periphery of the rivet terminal.

The first current collector plate may include a first current collector plate first connection region electrically connected to the first tab, a first current collector plate connecting region bent from, and extending in the first direction from, the first current collector plate first connection region, and a first current collector plate second connection region bent from, and extending from, the first current collector plate connecting region to be electrically connected to the rivet terminal, wherein the second current collector plate includes a second current collector plate first connection region electrically connected to the second tab, a second current collector plate connecting region bent from, and extending in the first direction from, the second current collector plate first connection region, and a second current collector plate second connection region bent from, and extending from, the second current collector plate connecting region to be electrically connected to the case.

The first current collector plate first connection region and the second current collector plate first connection region may be at a same plane, wherein the first current collector plate second connection region is closer to the electrode assembly than the second current collector plate second connection region.

The case may include a rivet plate to which the rivet terminal is coupled, a sidewall integrally extending in a second direction opposite to the first direction from the rivet plate, and a finishing plate configured to close an end of the sidewall.

The finishing plate may include a safety vent.

The finishing plate may be fixed to the sidewall by a beading portion and a crimping portion provided on the sidewall.

The finishing plate may be fixed to the sidewall by a weld.

The case may include a rivet plate to which the rivet terminal is coupled, a sidewall welded to the rivet plate and extending in a second direction opposite to the first direction, and a finishing plate integrally extending from the sidewall.

The finishing plate may include a safety vent.

At least some of the above and other features of the invention are set out in the claims.

### BRIEF DESCRIPTION OF DRAWINGS

FIGS. 1A and 1B are a perspective view and a cross-sectional view illustrating a secondary battery according to one or more embodiments of the present disclosure, respectively.
FIGS. 2A and 2B are a plan view and a perspective view illustrating an electrode assembly of the secondary battery according to one or more embodiments of the present disclosure, respectively.
FIG. 3 is a plan view illustrating an unfolded state of the electrode assembly of the secondary battery according to one or more embodiments of the present disclosure.
FIGS. 4A and 4B are a cross-sectional view and a perspective view illustrating a current collector plate assembly of the secondary battery according to one or more embodiments of the present disclosure, respectively.
FIG. 5 is a schematic view illustrating a laser-welding method in a method of manufacturing the secondary battery according to one or more embodiments of the present disclosure.
FIG. 6 is a cross-sectional view illustrating a secondary battery according to one or more embodiments of the present disclosure.
FIG. 7 is a cross-sectional view illustrating a secondary battery according to one or more embodiments of the present disclosure.
FIG. 8 is a cross-sectional view illustrating a secondary battery according to one or more embodiments of the present disclosure.

### DETAILED DESCRIPTION

Hereinafter, example embodiments of the present disclosure will be described in detail with reference to the accompanying drawings.

The present disclosures are provided to more fully describe the present disclosure to those skilled in the art, and following embodiments may be modified in many different forms, and the scope of the present disclosure is not limited to the following embodiments. Rather, these embodiments are provided so that the present disclosure will be thorough and complete, and will fully convey the spirit of the present disclosure to those skilled in the art.

In addition, in the drawings below, the thickness or size of each layer is exaggerated for convenience and clarity of illustration, and like reference numerals refer to like elements in the drawings. As used in the present specification, the term "and/or" may include any and all combinations of one or more of the associated listed items. In addition, in the present specification, it is to be understood that when a member A is referred to as being "connected to" a member B, the member A may be directly connected to the member B, or a member C may be interposed between the members A and B such that the member A is indirectly connected to the member B.

The terms used herein are for the purpose of describing specific embodiments and are not intended to limit the present disclosure. As used in the present specification, a singular form may, unless definitely indicating a particular case in terms of the context, include a plural form. In addition, the terms "comprise" or "include" and/or "comprising" or "including," when used in the present specification, specify the presence of stated features, numbers, steps, operations, members, elements, and/or groups thereof, but do not preclude the presence or addition of one or more other features, numbers, steps, operations, members, elements, and/or groups thereof.

In the present specification, although the terms "first," "second," and the like may be used to describe various members, components, regions, layers, and/or portions, these members, components, regions, layers, and/or portions are not to be limited by these terms. These terms are used to distinguish one member, component, region, layer, or portion from another member, component, region, layer, or portion. Thus, a first member, component, region, layer, or portion described below may also refer to a second member, component, region, layer, or portion without departing from the teachings of the present disclosure.

Spatially relative terms, such as "bottom," "beneath," "below," "lower," "above," "upper," may be used herein for easy understanding of one element or feature and another element(s) or feature(s) as illustrated in the drawings. These spatially relative terms are intended for ease of comprehension of the present disclosure according to various process states or usage states of the present disclosure, and are not intended to limit the present disclosure. For example, when an element or feature in the drawings is turned over, the element or feature described as "bottom," "beneath," or "below" may be changed into "above" or "upper." Thus, the term "bottom" or "beneath" may encompass the term "above" or "upper."

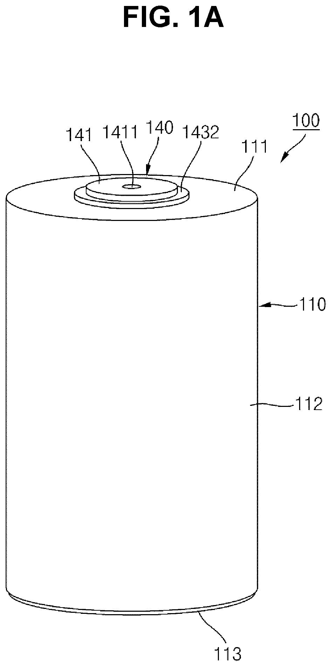

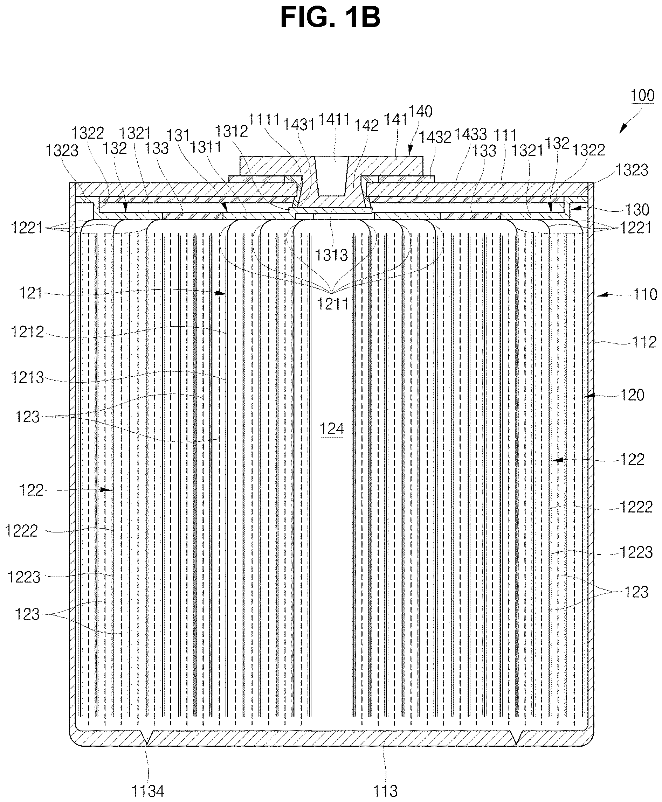

FIGS. 1A and 1B are a perspective view and a cross-sectional view illustrating a secondary battery 100 according to one or more embodiments of the present disclosure, respectively. As shown in FIGS. 1A and 1B, the secondary battery 100 according to one or more embodiments of the present disclosure may include a case 110, an electrode assembly 120, a current collector plate assembly 130, and a terminal (e.g. rivet terminal 140).

The case 110 may be provided in an approximately cylindrical shape. The case 110 may include an approximately disc-shaped rivet plate 111 having a terminal hole 1111 at the center thereof, a sidewall 112 extending in a downward direction from the rivet plate 111, and a finishing plate 113 configured to close a lower end portion of the sidewall 112. The case 110 may include, or may be referred to as, a can, a housing, or an exterior material. The case 110 may include steel, a steel alloy, nickel-plated steel, aluminum, an aluminum alloy, copper, or a copper alloy. The case 110 may be manufactured by a deep drawing process in which a metal flat plate is placed over a die having an opening, and is pressed by a punch to manufacture a cylindrical case, by an extrusion process in which molten metal is placed in an extrusion die and extruded into a pipe-shaped case, or by a bending and welding process in which a thin metal flat plate is rolled into a cylindrical shape, and is bent and welded to manufacture a case. The case 110 serves to accommodate the electrode assembly 120, the current collector plate assembly 130, and an electrolyte (optional), and to isolate them from an external environment.

In one or more embodiments, the sidewall 112 and the finishing plate 113 may be integrally provided. In one or more embodiments, the rivet plate 111 and the sidewall 112 may be separately provided, and then may be coupled to each other by laser welding. In one or more embodiments, the rivet plate 111 and the sidewall 112 may be coupled to each other by beading/crimping, curling, or seaming. In one or more embodiments, the rivet plate 111 and the sidewall 112 may be integrally provided. In one or more embodiments, the sidewall 112 and the finishing plate 113 may be separately provided, and then may be welded and coupled to each other. In one or more embodiments, the sidewall 112 and the finishing plate 113 may be coupled to each other by beading/crimping, curling, or seaming.

In one or more embodiments, the finishing plate 113 may include a vent notch 1134 provided in an upper surface thereof such that the finishing plate 113 is relatively thin at the vent notch 1134. The vent notch 1134 may include a safety vent, or may be referred to as a safety vent. The vent notch 1134 is broken if an internal pressure of the secondary battery is higher than a reference pressure to release an internal gas.

The electrode assembly 120 may be provided in a substantially cylindrical shape. The electrode assembly 120 may be wound in a cylindrical shape, and then may be coupled to the case 110. The electrode assembly 120 may include, or may be referred to as, an electrode group or a jelly roll. The electrode assembly 120 may include a first electrode plate 121 (e.g., a positive electrode plate), a second electrode plate 122 (e.g., a negative electrode plate), and a separator 123. In one or more embodiments, the first electrode plate 121 (e.g., the positive electrode plate), the separator 123, and the second electrode plate 122 (e.g., the negative electrode plate) may be wound into an approximately cylindrical shape while being stacked. The first electrode plate 121 may include a first tab 1211 extending in an upward direction at an approximate center of the electrode assembly 120. The second electrode plate 122 may include a second tab 1221 extending in the upward direction at an approximate perimeter of the electrode assembly 120. The upward direction may be defined as a first direction, and the downward direction opposite to the upward direction may be defined as a second direction.

In one or more embodiments, the first electrode plate 121 may be provided by applying a first active material 1213, such as a transition metal oxide to a first current collector 1212 formed of a metal foil, such as aluminum, and may include the first tab 1211 (e.g., a region not coated with the first active material 1213) extending in the upward direction at an approximate center of the first current collector 1212. The extending and protruding first tab 1211 may be referred to as a first non-coated tab or a first base material tab, and the first tab 1211 may be provided through a winding process of the electrode assembly 120, a base material punching process, or a base material notching process to form a multitap. In one or more embodiments, the first tab 1211 may include a lead tab that is separately provided and welded to the first current collector 1212.

In one or more embodiments, a compound capable of reversible intercalation and deintercalation of lithium (a lithiated intercalation compound) may be used as the first active material. Specifically, at least one of a composite oxide of lithium and a metal selected from cobalt, manganese, nickel, iron, or a combination thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

In an example, a compound represented by any one of the following chemical formulas may be used: LiₐA_{1-b}X_{b}O_{2-c}D_{c} (where 0.90≤a≤1.8, 0≤b≤0.5, and 0≤c≤0.05); LiₐMn_{2-b}X_{b}O_{4-c}D_{c} (where 0.90≤a≤1.8, 0≤b≤0.5, and 0≤c≤0.05); LiₐNi_{1-b-c}Co_{b}X_{c}O_{2-α}D_{α} (where 0.90≤a≤1.8, 0≤b≤0.5, and 0≤c≤0.5, 0<α<2); LiₐNi_{1-b-c}Mn_{b}X_{c}O_{2-α}D_{α} (where 0.90≤a≤1.8, 0≤b≤0.5, 0≤c≤0.5, and 0<α<2); LiₐNi_{b}Co_{c}L¹_{d}GₑO₂ (where 0.90≤a≤1.8, 0≤b≤0.9, 0≤c≤0.5, 0≤d≤0.5, and 0≤e≤0.1); LiₐNiG_{b}O₂ (where 0.90≤a≤1.8 and 0.001≤b≤0.1); LiₐCoG_{b}O₂ (where 0.90≤a≤1.8 and 0.001≤b≤0.1); LiₐMn_{1-b}G_{b}O₂ (where 0.90≤a≤1.8 and 0.001≤b≤0.1); LiₐMn₂G_{b}O₄ (where 0.90≤a≤1.8 and 0.001≤b≤0.1); LiₐMn_{1-g}G_{g}PO₄ (where 0.90≤a≤1.8 and 0≤g≤0.5); Li_{(3-f)}Fe₂(PO₄)₃ (0≤f≤2); or LiₐFePO₄ (where 0.90≤a≤1.8).

In the above formulas, A is Ni, Co, Mn, or a combination thereof; X is Al, Ni, Co, Mn, Cr, Fe, Mg, Sr, V, a rare-earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

In one or more embodiments, a positive electrode for a lithium secondary battery may include a current collector (e.g., a first current collector), and a positive electrode active material layer (e.g., a first active material layer) formed on the current collector. The positive electrode active material layer includes a positive electrode active material, and may further include a binder and/or a conductive material.

In one or more embodiments, the content of the positive electrode active material may be from 90 wt% or about 90 wt% to 99.5 wt% or about 99.5 wt% based on 100 wt% of the positive electrode active material layer, and the content of each of the binder and the conductive material may be from 0.5 wt% or about 0.5 wt% to 5 wt% or about 5 wt% based on 100 wt% of the positive electrode active material layer.

The first tab 1211 is electrically connected to a first current collector plate 131 and the rivet terminal 140 to serve as a current flow path between the first electrode plate 121 and the rivet terminal 140.

In one or more embodiments, the second electrode plate 122 may be provided by applying a second active material 1223, such as graphite or carbon, onto a second current collector 1222 formed of a metal foil, such as copper or nickel, and may include the second tab 1221 (for example, a region not coated with the second active material 1223) extending and protruding in the upward direction form an approximate perimeter of the second current collector 1222. The extending and protruding second tabs 1221 may be referred to as second non-coated tabs or second base material tabs, and the second tabs 1221 may be provided through a winding process of the electrode assembly 120, a base material punching process, or a base material notching process to form a multitap. In one or more embodiments, the second tab 1221 may include a lead tab that is separately provided and welded to the second current collector 1222. The second tab 1221 is electrically connected to the second terminal (e.g., the case 110) to serve as a current flow path between the second electrode plate 122 and the case 110.

In one or more embodiments, the second active material includes a material capable of reversibly intercalating/deintercalating lithium ions, a lithium metal, an alloy of a lithium metal, a material capable of doping and dedoping lithium, or a transition metal oxide.

The material capable of reversibly intercalating/deintercalating lithium ions may include, for example, crystalline carbon, amorphous carbon, or a combination thereof. Examples of the crystalline carbon may be graphite, such as natural graphite or artificial graphite, and examples of the amorphous carbon may include soft carbon or hard carbon, mesophase pitch carbide, calcined coke, and the like.

A Si-based negative electrode active material or a Sn-based negative electrode active material may be used as the material capable of doping and dedoping lithium. The Si-based anode active material may include silicon, a silicon-carbon composite, SiOₓ (0<x<2), a Si-based alloy, or a combination thereof.

The silicon-carbon composite may be a composite of silicon and amorphous carbon. According to one or more embodiments, the silicon-carbon composite may be in the form of silicon particles and amorphous carbon coated on the surface of the silicon particles.

The silicon-carbon composite may further include crystalline carbon. For example, the silicon-carbon composite may include a core including crystalline carbon and silicon particles, and an amorphous carbon coating layer located on a surface of the core.

A negative electrode for a lithium secondary battery may include a current collector (e.g., a second current collector) and a negative electrode active material layer (e.g., a second active material layer) formed on the current collector. The negative electrode active material layer includes a negative electrode active material, and may further include a binder and/or a conductive material.

For example, the negative electrode active material layer may include 90 wt% or about 90 wt% to 99 wt% or about 99 wt% of the negative electrode active material, 0.5 wt% or about 0.5 wt% to 5 wt% or about 5 wt% of the binder, and 0 wt% or about 0 wt% to 5 wt% or about 5 wt% of the conductive material. A non-aqueous binder, an aqueous binder, a dry binder, or a combination thereof may be used as the binder. When the aqueous binder is used as the negative electrode binder, a cellulose-based compound capable of imparting viscosity can be further included.

The separator 123 may be interposed between the first electrode plate 121 and the second electrode plate 122 to serve to reduce or prevent the likelihood of a short circuit between the first electrode plate 121 and the second electrode plate 122, and to enable the movement of lithium ions. The separator 123 is formed to be slightly wider than a width of each of the first electrode plate 121 and the second electrode plate 122, so that the separator 123 may protrude further upward, downward, leftward, and/or rightward than each of the first electrode plate 121 and the second electrode plate 122. In one or more embodiments, the separator 123 can reduce or prevent the likelihood of the first electrode plate 121 and the second electrode plate 122 directly coming into contact with the case 110 in upward, downward, leftward, and/or rightward directions of the electrode assembly 120. In one or more embodiments, the separator 123 may protrude and may extend (e.g., may extend a predetermined length) in the upward and downward directions of the electrode assembly 120, in which the first tab 1211 and the second tab 1221 are not present.

In one or more embodiments, the electrode assembly 120 may be hollow in a substantially central region, and this hollow central region may be referred to as a core 124. The core 124 may serve as a path through which pressure is discharged when an internal pressure of the secondary battery is greater than the reference pressure. In one or more embodiments, the internal pressure may be applied to the finishing plate 113 through the core 124, and eventually the vent notch 1134 of the finishing plate 113 may be broken so that the internal pressure can be reduced.

In one or more embodiments, the electrode assembly 120 may be accommodated in the case 110 with an electrolyte. The electrolyte solution may include an organic solvent, such as ethylene carbonate (EC), propylene carbonate (PC), diethyl carbonate (DEC), ethylmethyl carbonate (EMC) and/or dimethyl carbonate (DMC), and a lithium salt, such as LiPF₆ and LiBF₄. In one or more embodiments, the electrolyte may be in a liquid, solid, or gel phase.

The current collector plate assembly 130 may include the first current collector plate 131 and a second current collector plate 132. The current collector plate assembly 130 may further include an insulating plate 133.

The first current collector plate 131 may electrically connect the first electrode plate 121 of the electrode assembly 120 and the rivet terminal 140. The first current collector plate 131 may include, or may be referred to as, a current collector, a conductor, or a conductive lead. The first current collector plate 131 may be made of aluminum or an aluminum alloy. The first current collector plate 131 may be manufactured by punching a metal plate using a die and a punch, or by casting molten metal. In one or more embodiments, the first current collector plate 131 may include a first current collector plate first connection region 1311, a first current collector plate connecting region 1312, and a first current collector plate second connection region 1313. The first current collector plate first connection region 1311 may be electrically connected to the above-described first tab 1211, which has an approximately circular ring shape, by a method, such as laser welding. The first current collector plate connecting region 1312 may be bent, and may extend in the upward direction from the first current collector plate first connection region 1311. The first current collector plate second connection region 1313 may be bent, and may extend from the first current collector plate connecting region 1312 to be electrically connected to the rivet terminal 140 by a method, such as laser welding. In this manner, the first current collector plate 131 may serve as a current flow path between the electrode assembly 120 and the rivet terminal 140.

The second current collector plate 132 may electrically connect the second electrode plate 122 of the electrode assembly 120 and the case 110 (e.g., the rivet plate 111). The second current collector plate 132 may include, or may be referred to as, a current collector, a conductor, or a conductive lead. The second current collector plate 132 may be made of copper, a copper alloy, nickel, or a nickel alloy. The second current collector plate 132 may be manufactured by punching a metal plate using a die and a punch, or by casting molten metal. In one or more embodiments, the second current collector plate 132 may include a second current collector plate first connection region 1321, a second current collector plate connecting region 1322, and a second current collector plate second connection region 1323. The second current collector plate first connection region 1321 may be electrically connected to the above-described second tab 1221, which has an approximately circular ring shape, by a method, such as laser welding. The second current collector plate connecting region 1322 may be bent, and may extend in the upward direction from the second current collector plate first connection region 1321. The second current collector plate second connection region 1323 may be bent, and may extend from the second current collector plate connecting region 1322 to be electrically connected to the case 110 (e.g., the rivet plate 111) by a method, such as laser welding. In this manner, the second current collector plate 132 may serve as a current flow path between the electrode assembly 120 and the case 110.

The insulating plate 133 may be interposed between the first current collector plate 131 and the second current collector plate 132. In one or more embodiments, the insulating plate 133 may be provided on substantially the same horizontal plane as the first current collector plate 131 and the second current collector plate 132. In one or more embodiments, a partial region of the insulating plate 133 may be interposed between the second current collector plate second connection region 1323 and the electrode assembly 120. The insulating plate 133 may include, or may be referred to as, an insulator, an insulating block, or an insulating spacer. The insulating plate 133 may be made of polypropylene, polyethylene, ethylene-propylene-diene M-class rubber (EPDM), or nylon that does not react with an electrolyte. In one or more embodiments, the first current collector plate 131, the second current collector plate 132, and the insulating plate 133 may be manufactured through a double injection method.

The rivet terminal 140 may pass through, and may be coupled to, the case 110. In one or more embodiments, the rivet terminal 140 may pass through, and may be coupled to, the terminal hole 1111 provided in the rivet plate 111. In one or more embodiments, an insulating gasket 1431 may be interposed between the rivet terminal 140 and the terminal hole 1111. In one or more embodiments, the rivet terminal 140 may include a head portion 141 that is relatively wide, and a body portion 142 that is relatively narrow and that extends in the downward direction from the head portion 141 to pass through the terminal hole 1111. In one or more embodiments, the rivet terminal 140 may further include a recess 1411 provided at a depth (e.g., a predetermined depth) from the head portion 141 toward the body portion 142. A thickness between a lower surface of the body portion 142 and a lowermost surface of the rivet terminal 140 corresponding to the lower surface of the body portion 142 may be relatively reduced by the recess 1411, so that energy of laser beam is well transmitted to the first current collector plate 131 (e.g., the first current collector plate second connection region 1313), thereby allowing the rivet terminal 140 and the first current collector plate 131 to be laser welded to each other. In one or more embodiments, an upper insulator 1432 may be further interposed between the head portion 141 and the rivet plate 111. In one or more embodiments, a lower insulator 1433 may be further interposed at a periphery of the body portion 142 passing through the rivet plate 111. In one or more embodiments, the lower insulator 1433 may be interposed between the current collector plate assembly 130 and the rivet plate 111. In one or more embodiments, the recess 1411 may be finished with a substantially flat member (e.g., metal) after the welding process. In one or more embodiments, after the welding process, a metal member may be coupled to the recess 1411, or may close an upper end of the recess 1411.

In this manner, the present disclosure may provide the secondary battery 100 with a low electrical resistance and a short current path by providing the first tab 1211 (e.g., a positive electrode tab) and the second tab 1221 (e.g., a negative electrode tab) of the electrode assembly 120 in the same direction (e.g., in the upward direction) to be respectively electrically connected to the first terminal (e.g., the rivet terminal 140) and to the second terminal (e.g., the case 110). In one or more embodiments, the present disclosure may provide the secondary battery 100 allowing a relatively large electrode assembly 120 to be accommodated inside the case 110 by having the first current collector plate 131 (e.g., a positive electrode current collector plate) and the second current collector plate 132 (e.g., a negative electrode current collector plate) that are three-dimensionally coupled and provided in the same region to occupy a relatively small volume in an inner space of the case 110.

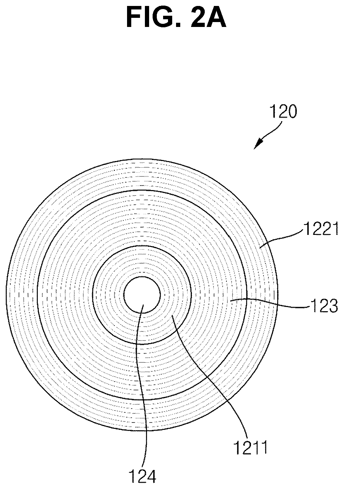

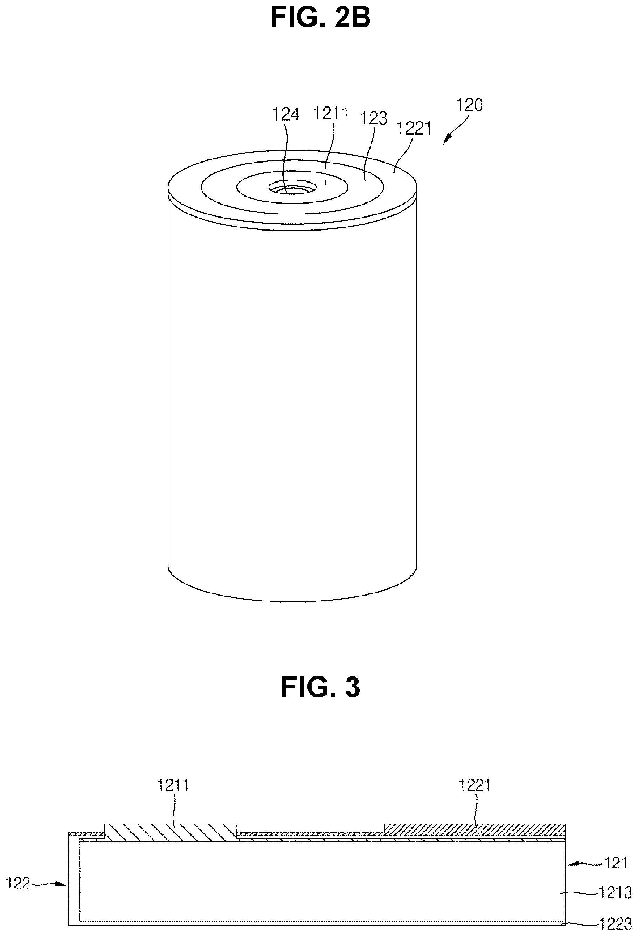

FIGS. 2A and 2B are a plan view and a perspective view illustrating an electrode assembly 120 of the secondary battery 100 according to one or more embodiments of the present disclosure, respectively. As shown in FIGS. 2A and 2B, the electrode assembly 120 according to one or more embodiments of the present disclosure may include a first tab 1211 protruding and extending in the upward direction at an approximately central region thereof, and a second tab 1221 protruding and extending in the upward direction at an approximately perimeter region thereof. In one or more embodiments, the first tab 1211 and the second tab 1221 may have different diameters around a central core 124 (e.g., an empty space).

In one or more embodiments, a planar shape of the first tab 1211 may be an approximately circular ring shape with the same width. In one or more embodiments, a planar shape of the second tab 1221 may be an approximately circular ring shape with the same width having a diameter that is relatively greater than a diameter of the first tab 1211. In one or more embodiments, a planar shape of a separator 123 may be an approximately circular ring shape with the same width between the first tab 1211 and the second tab 1221. In one or more embodiments, a partial region of the separator 123 may protrude, and may extend into a region in which the first tab 1211 and the second tab 1221 do not protrude and extend. In one or more embodiments, an upper side of the first tab 1211, an upper side of the second tab 1221, and an upper side of the separator 123 may be substantially coplanar with each other. As will be described again below, the planar shape of the first tab 1211 may be the same as or similar to a planar shape of the first current collector plate first connection region 1311. As will be described again below, the planar shape of the second tab 1221 may be the same as or similar to a planar shape of the second current collector plate first connection region 1321.

FIG. 3 is a plan view illustrating an unfolded state of the electrode assembly 120 of the secondary battery according to one or more embodiments of the present disclosure. In FIG. 3, in each of first and second electrode plates 121 and 122, a left end is a winding start end (a portion at which winding starts), and a right end is a winding finish end (a portion at which winding is finished). For convenience of description, the separator is not illustrated.

As shown in FIG. 3, the first tab 1211 may be provided by a base material punching method. In one or more embodiments, the first tab 1211 may be closer to the winding start end than to the winding finish end, and a horizontal width of the first tab 1211 may be greater than a vertical width thereof. In one or more embodiments, in a winding process, one first tab 1211 may be wound multiple times at the winding start end, such that the planar shape of the first tab 1211 may be an approximately circular ring shape. As shown in FIG. 3, the second tab 1221 may be provided by a base material punching method. In one or more embodiments, the second tab 1221 may be closer (e.g. provided closer) to the winding finish end than the winding start end, and a horizontal width of the second tab 1221 may be greater than a vertical width thereof. In one or more embodiments, in the winding process, one second tab 1221 may be wound multiple times at the winding finish end, such that the planar shape of the second tab 1221 may be an approximately circular ring shape. In one or more embodiments, the first and second tabs 1211 and 1221 may each be provided through a method in which notching is added after punching a base material. In one or more embodiments, the first and second tabs 1211 and 1221 may be separately provided and connected to the first and second electrode plates 121 and 122, respectively.

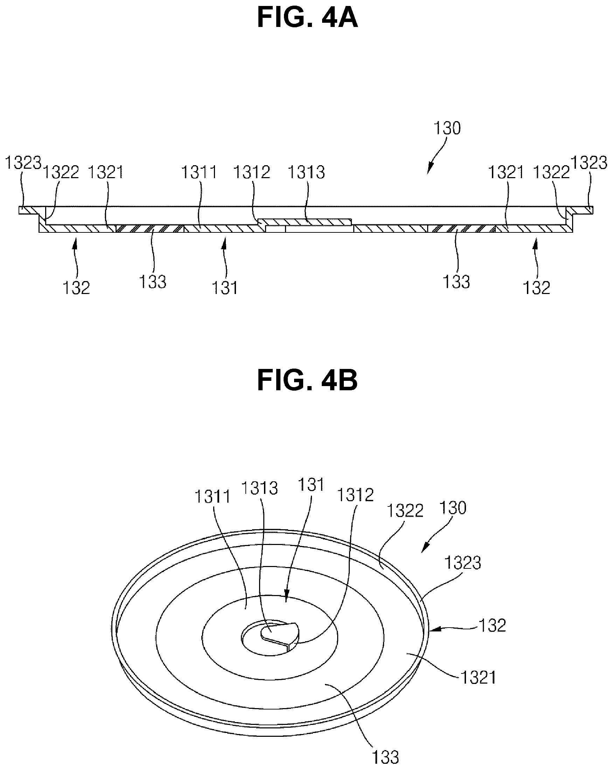

FIGS. 4A and 4B are a plan view and a perspective view illustrating a current collector plate assembly 130 of the secondary battery 100 according to one or more embodiments of the present disclosure, respectively. As shown in FIGS. 4A and 4B, the current collector plate assembly 130 may include a first current collector plate 131, a second current collector plate 132, and an insulating plate 133.

The first current collector plate 131 may include a first current collector plate first connection region 1311, a first current collector plate connecting region 1312, and a first current collector plate second connection region 1313. In one or more embodiments, a planar shape of the first current collector plate first connection region 1311 may be an approximately circular ring shape with a center. In one or more embodiments, the first current collector plate connecting region 1312 may be bent, and may extend the upward direction at a partial region inside the first current collector plate first connection region 1311. In one or more embodiments, the first current collector plate second connection region 1313 may be bent, and may extend in an approximately inward horizontal direction from the first current collector plate connecting region 1312. In one or more embodiments, a planar shape of the first current collector plate second connection region 1313 may be an approximately triangular, square, or circular shape.

In one or more embodiments, in the first current collector plate first connection region 1311, a plurality of welding lines in the form of straight or circular lines may be provided radially, and the first tabs 1211 and the first current collector plate first connection region 1311 may be electrically connected to each other by the welding lines. In one or more embodiments, the first tab 1211 may be pressed or bent in an inward or outward direction, and may be welded to the first current collector plate first connection region 1311. In one or more embodiments, in the first current collector plate second connection region 1313, a plurality of welding lines may be provided in a ring shape, and the rivet terminal 140 and the first current collector plate second connection region 1313 may be electrically connected to each other by the welding lines.

In one or more embodiments, the planar shape of the first current collector plate first connection region 1311 may be the same as or similar to the planar shape of the first tab 1211. In one or more embodiments, the first current collector plate first connection region 1311 may have a shape overlapping the first tab 1211.

The second current collector plate 132 may include a second current collector plate first connection region 1321, a second current collector plate connecting region 1322, and a second current collector plate second connection region 1323. In one or more embodiments, a planar shape of the second current collector plate first connection region 1321 may be an approximately circular ring shape with a center. In one or more embodiments, a diameter of the second current collector plate first connection region 1321 may be greater than a diameter of the first current collector plate first connection region 1311. In one or more embodiments, the second current collector plate first connection region 1321 may be spaced apart from the first current collector plate first connection region 1311. In one or more embodiments, the second current collector plate connecting region 1322 may be bent, and may extend in the upward direction at the entire outer region of the second current collector plate first connection region 1321. In one or more embodiments, the second current collector plate second connection region 1323 may be bent, and may extend in an approximately outward horizontal direction from the second current collector plate connecting region 1322. In one or more embodiments, the second current collector plate second connection region 1323 may have an approximately circular ring shape with a center. In one or more embodiments, the center of the first current collector plate first connection region 1311 and the center of the second current collector plate second connection region 1323 may share the same center point. In one or more embodiments, this center point may coincide with a center of the core 124 of the electrode assembly 120.

In one or more embodiments, in the second current collector plate first connection region 1321, a plurality of welding lines in the form of straight or circular lines may be provided radially, and the second tab 1221 and the second current collector plate first connection region 1321 may be electrically connected to each other by the welding lines. In one or more embodiments, the second tab 1221 may be pressed or bent in the inward or outward direction, and may be welded to the second current collector plate first connection region 1321. In one or more embodiments, in the second current collector plate second connection region 1323, a plurality of welding lines may be provided in a circular line shape, and the case 110 (e.g., the rivet plate 111) and the second current collector plate second connection region 1323 may be electrically connected to each other by the welding lines.

In one or more embodiments, the planar shape of the second current collector plate first connection region 1321 may be the same as or similar to the planar shape of the second tab 1221. In one or more embodiments, the second current collector plate first connection region 1321 may have a shape overlapping the second tab 1221.

In one or more embodiments, the first current collector plate first connection region 1311 and the second current collector plate first connection region 1321 may be located at the same or similar planes, and the first current collector plate second connection region 1313 may be located closer to the electrode assembly 120 than the second current collector plate second connection region 1323 is. In one or more embodiments, the current collector plate assembly 130 is provided with a compact thickness, and thus occupies a relatively small volume inside the secondary battery 100. In one or more embodiments, a relatively large electrode assembly 120 may be provided inside the secondary battery 100.

The insulating plate 133 may be provided between the first current collector plate 131 and the second current collector plate 132. In one or more embodiments, a partial region of the insulating plate 133 may also be provided between the second current collector plate second connection region 1323 and the electrode assembly 120. In one or more embodiments, a planar shape of the insulating plate 133 may be a circular ring shape with a center. In one or more embodiments, the first current collector plate 131, the second current collector plate 132, and the insulating plate 133 may be manufactured through a double injection method so that an integrated current collector plate assembly 130 may be formed.

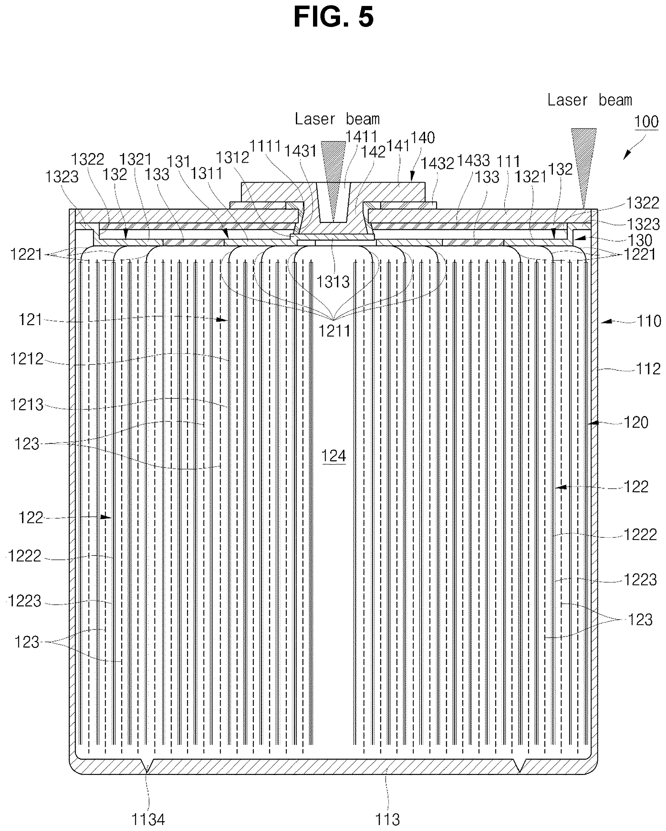

FIG. 5 is a schematic view illustrating a laser-welding method in a method of manufacturing the secondary battery 100 according to one or more embodiments of the present disclosure. As shown in FIG. 5, a laser beam is applied to the recess 1411 of the rivet terminal 140 such that the body portion 142 of the rivet terminal 140 may be electrically connected to the first current collector plate first connection region 1311. In one or more embodiments, referring to FIG. 5, a laser beam is applied along a perimeter of the case 110 (e.g., the rivet plate 111) so that the rivet plate 111 may be electrically connected to the second current collector plate second connection region 1323.

In this manner, a first current path is provided through the first terminal (e.g., the rivet terminal 140), the first current collector plate 131, and the first electrode plate 121, and a second current path is provided through the second terminal (e.g., the case 110 or the rivet plate 111), the second current collector plate 132, and the second electrode plate 122. In one or more embodiments, an internal electrical resistance of the secondary battery 100 may be reduced by providing the first and second current paths that are relatively short.

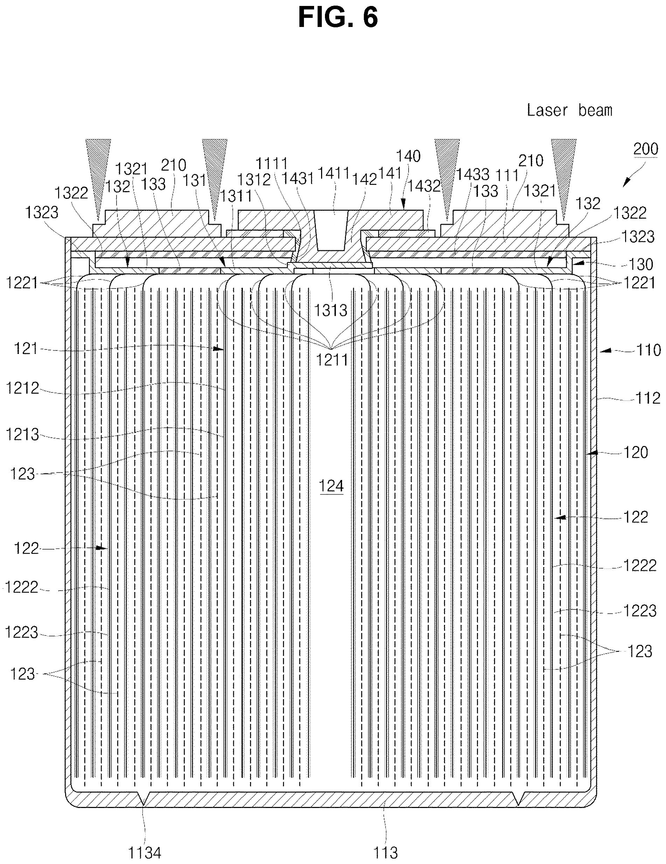

FIG. 6 is a cross-sectional view illustrating a secondary battery 200 according to one or more embodiments of the present disclosure. The secondary battery 200 illustrated in FIG. 6 may be similar to the secondary battery 100 illustrated in FIGS. 1A and 1B, except that a conductive ring plate 210 is further provided. As shown in FIG. 6, the conductive ring plate 210 may be mechanically/electrically attached to a partial region of a case 110, which is a periphery of a rivet terminal 140 (e.g., on a rivet plate 111). In one or more embodiments, the conductive ring plate 210 may be welded to the rivet plate 111 by a laser beam. The conductive ring plate 210 may be provided with a material similar to or the same as that of the rivet plate 111. In one or more embodiments, an upper surface of the conductive ring plate 210 may be at a plane similar to or the same as an upper surface of the rivet terminal 140. In one or more embodiments, busbars connected to the rivet terminal 140 and the conductive ring plate 210 may have the same height. In one or more embodiments, the upper surface of the conductive ring plate 210 may be lower than the upper surface of the rivet terminal 140. In one or more embodiments, the busbars connected to the rivet terminal 140 and the conductive ring plate 210 may have different heights.

In this manner, the present disclosure may provide the secondary battery 200 having suitable flatness between the first terminal (e.g., the rivet terminal 140) and the second terminal (e.g., the case 110) by providing the conductive ring plate 210 on the second terminal (e.g., the rivet plate 111 of the case 110).

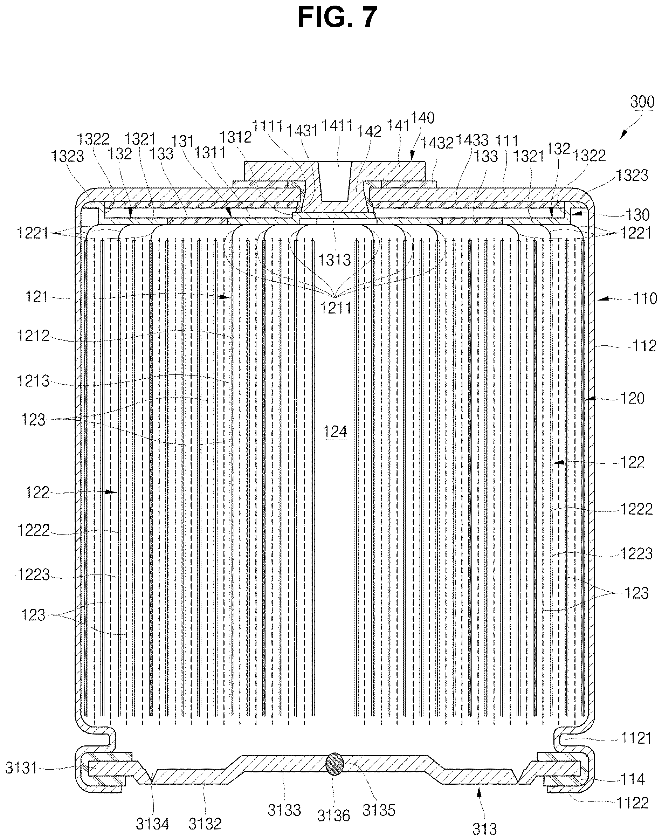

FIG. 7 is a cross-sectional view illustrating a secondary battery 300 according to one or more embodiments of the present disclosure. The secondary battery 300 illustrated in FIG. 7 may be similar to the secondary battery 100 illustrated in FIGS. 1A and 1B, except that a finishing plate 313 is coupled through a beading portion 1121 and a crimping portion 1122 provided to a sidewall 112 of a case 110. As shown in FIG. 7, the beading portion 1121 recessed inward and the crimping portion 1122 bent inward may be optionally provided at a lower end of the sidewall 112 of the case 110. In one or more embodiments, the finishing plate 313 may be coupled between the beading portion 1121 and the crimping portion 1122. In one or more embodiments, an insulating gasket 114 may be located in the beading portion 1121 and the crimping portion 1122, such that the finishing plate 313 may be coupled while the insulating gasket 114 is interposed between the beading portion 1121 and the crimping portion 1122. Instead of providing the beading portion 1121 and the crimping portion 1122, the finishing plate 313 may be directly welded to the sidewall 112, or the finishing plate 113 may be coupled to the sidewall 112 by a curling method or a seaming method.

In one or more embodiments, the finishing plate 313 may include a relatively thin vent notch 3134 defined by an upper surface thereof. In one or more embodiments, the finishing plate 313 may include a peripheral region 3131 fitted between the beading portion 1121 and the crimping portion 1122, an inner region 3132 that is connected to the peripheral region 3131 and that is lower than the peripheral region 3131, and a central region 3133 that is connected to the inner region 3132 and that is higher than the inner region 3132. The vent notch 3134 may be at the inner region 3132. In one or more embodiments, the central region 3133 may be closer to the electrode assembly 120 than the peripheral region 3131 and the inner region 3132. The vent notch 3134 may include a safety vent, or may be referred to as a safety vent.

In one or more embodiments, the finishing plate 313 may further include an injection hole 3135 and a plug 3136. The injection hole 3135 may be provided in, or defined by, the finishing plate 313 (e.g., the central region 3133), and the injection hole 3135 may be closed by the plug 3136. In one or more embodiments, an electrolyte may be injected through the injection hole 3135, and the injection hole 3135 may be closed by the plug 3136, thereby reducing or preventing leakage of the electrolyte. In one or more embodiments, such an injection hole and plug may be provided in a rivet plate 111, which may be applicable to all of the embodiments described above.

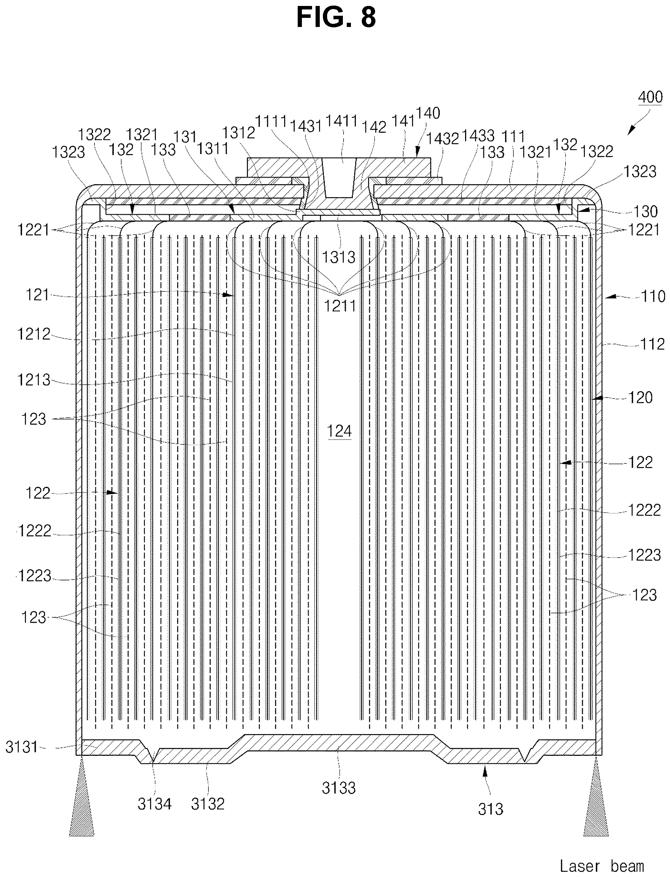

FIG. 8 is a cross-sectional view illustrating a secondary battery 400 according to one or more embodiments of the present disclosure. The secondary battery 400 illustrated in FIG. 8 may be similar to the secondary battery 300 illustrated in FIG. 7, except that a finishing plate 313 is welded and fixed to a sidewall 112 of a case 110. As shown in FIG. 8, the finishing plate 313 may be fixed to the sidewall 112 of the case 110 by laser welding. In one or more embodiments, after the finishing plate 313 is coupled to the sidewall 112 of the case 110, a laser beam may be irradiated to a portion at which a perimeter of the finishing plate 313 is in contact with the sidewall 112. In one or more embodiments, the perimeter of the finishing plate 313 and a partial region of the sidewall 112 are melted and cooled, so that the finishing plate 313 may be coupled to the sidewall 112 of the case 110. As described above, according to one or more embodiments of the present disclosure, by providing a beadless secondary battery 400, a space occupied by beading and crimping portions can be eliminated. The present disclosure may provide a relatively high capacity secondary battery 400 by allowing a relatively larger electrode assembly 120 to be accommodated in the case 110.

The present disclosure can provide a secondary battery having a low electrical resistance and a short current path by providing a first tab (e.g., a positive electrode tab) and a second tab (e.g., a negative electrode tab) of an electrode assembly in the same direction to be electrically connected to a first terminal (e.g., a rivet terminal) and a second terminal (e.g., a case).

The present disclosure can provide a secondary battery allowing a relatively large electrode assembly to be accommodated inside a case by having a first current collector plate (e.g., a positive electrode current collector plate) and a second current collector plate (e.g., a negative electrode current collector plate) that are three-dimensionally coupled and provided in the same region to occupy a small volume in an inner space of the case.

The present disclosure can provide a secondary battery having suitable flatness between a first terminal (e.g., a rivet terminal) and a second terminal (e.g., a case) by providing a conductive ring plate on the second terminal.

Embodiments are set out in the following clauses:
Clause 1. A secondary battery comprising: a case having a cylindrical shape; an electrode assembly accommodated in the case, and comprising a first tab protruding in a first direction at a center portion thereof and a second tab protruding in the first direction at a perimeter thereof; a first current collector plate accommodated in the case and connected to the first tab; a second current collector plate configured to connect the second tab to the case; and a rivet terminal connected to the first current collector plate and passing through the case.
Clause 2. The secondary battery of Clause 1, wherein a planar shape of the first tab is a circular ring shape with a center.
Clause 3. The secondary battery of Clause 1, wherein the second tab is provided to be spaced apart from the first tab and has a planar shape that is a circular ring shape with a center.
Clause 4. The secondary battery of Clause 1, wherein a diameter of the first tab is less than a diameter of the second tab.
Clause 5. The secondary battery of Clause 1, wherein a separator is interposed between the first tab and the second tab.
Clause 6. The secondary battery of Clause 1, wherein the first current collector plate comprises: a first current collector plate first connection region connected to the first tab; a first current collector plate connecting region bent and extending in the first direction from the first current collector plate first connection region; and a first current collector plate second connection region bent and extending from the first current collector plate connecting region to be connected to the rivet terminal.
Clause 7. The secondary battery of Clause 6, wherein the first current collector plate connecting region extends from a portion of an inner perimeter of the first current collector plate first connection region.
Clause 8. The secondary battery of Clause 6, wherein a planar shape of the first current collector plate second connection region is a triangular shape.
Clause 9. The secondary battery of Clause 1, wherein the second current collector plate includes: a second current collector plate first connection region connected to the second tab; a second current collector plate connecting region bent and extending in the first direction from the second current collector plate first connection region; and a second current collector plate second connection region bent and extending from the second current collector plate connecting region to be connected to the case.
Clause 10. The secondary battery of Clause 9, wherein a planar shape of the second current collector plate first connection region is a circular ring shape with a center.
Clause 11. The secondary battery of Clause 9, wherein the second current collector plate connecting region extends from an entire outer perimeter of the second current collector plate first connection region.
Clause 12. The secondary battery of Clause 9, wherein a planar shape of the second current collector plate second connection region is a circular ring shape with a center.
Clause 13. The secondary battery of Clause 1, further comprising an insulating plate interposed between the first current collector plate and the second current collector plate.
Clause 14. The secondary battery of Clause 1, further comprising a conductive ring plate attached to a partial region of the case, which is a periphery of the rivet terminal.
Clause 15. The secondary battery of Clause 1, wherein the first current collector plate comprises a first current collector plate first connection region connected to the first tab, a first current collector plate connecting region bent and extending in the first direction from the first current collector plate first connection region, and a first current collector plate second connection region bent and extending from the first current collector plate connecting region to be connected to the rivet terminal, and the second current collector plate comprises a second current collector plate first connection region connected to the second tab, a second current collector plate connecting region bent and extending in the first direction from the second current collector plate first connection region, and a second current collector plate second connection region bent and extending from the second current collector plate connecting region to be connected to the case.
Clause 16. The secondary battery of Clause 15, wherein the first current collector plate first connection region and the second current collector plate first connection region are located on the same plane, and the first current collector plate second connection region is located closer to the electrode assembly than the second current collector plate second connection region is.
Clause 17. The secondary battery of Clause 1, wherein the case comprises a rivet plate to which the rivet terminal is coupled therethrough, a sidewall integrally extending in a second direction opposite to the first direction from the rivet plate, and a finishing plate configured to close an end of the sidewall.
Clause 18. The secondary battery of Clause 17, wherein the finishing plate comprises a safety vent.
Clause 19. The secondary battery of Clause 17, wherein the finishing plate is fixed to the sidewall by a beading portion and a crimping portion provided on the sidewall.
Clause 20. The secondary battery of Clause 17, wherein the finishing plate is fixed to the sidewall by welding.
Clause 21. The secondary battery of Clause 1, wherein the case comprises a rivet plate to which the rivet terminal is coupled therethrough, a sidewall welded to the rivet plate and extending in a second direction opposite to the first direction, and a finishing plate integrally extending from the sidewall.
Clause 22. The secondary battery of Clause 21, wherein the finishing plate comprises a safety vent.

The present disclosure is not limited to the above-described embodiments. Various changes can be made by anyone skilled in the art without departing from the gist of the present disclosure.

## Claims

1. A secondary battery comprising:
a case having a cylindrical shape;
an electrode assembly in the case, and comprising a first tab protruding in a first direction at a center portion thereof, and a second tab protruding in the first direction at a perimeter thereof;
a first current collector plate in the case and electrically connected to the first tab;
a second current collector plate electrically connecting the second tab to the case; and
a rivet terminal electrically connected to the first current collector plate, and passing through the case.

2. The secondary battery of claim 1, wherein a planar shape of the first tab is a circular ring with a center.

3. The secondary battery of claim 1 or 2, wherein the second tab is spaced apart from the first tab, and has a planar shape that is a circular ring with a center.

4. The secondary battery of claim 1, 2 or 3, wherein a diameter of the first tab is less than a diameter of the second tab.

5. The secondary battery of any preceding claim, further comprising a separator between the first tab and the second tab.

6. The secondary battery of any preceding claim, wherein the first current collector plate comprises:
a first current collector plate first connection region electrically connected to the first tab;
a first current collector plate connecting region bent from, and extending in the first direction from, the first current collector plate first connection region; and
a first current collector plate second connection region bent from, and extending from, the first current collector plate connecting region to be electrically connected to the rivet terminal.

7. The secondary battery of claim 6, wherein the first current collector plate connecting region extends from an inner perimeter of the first current collector plate first connection region.

8. The secondary battery of claim 6 or 7, wherein a planar shape of the first current collector plate second connection region is triangular.

9. The secondary battery of any preceding claim, wherein the second current collector plate includes:
a second current collector plate first connection region electrically connected to the second tab;
a second current collector plate connecting region bent from, and extending in the first direction from, the second current collector plate first connection region; and
a second current collector plate second connection region bent from, and extending from, the second current collector plate connecting region to be electrically connected to the case.

10. The secondary battery of claim 9, wherein at least one of:
a planar shape of the second current collector plate first connection region is a circular ring with a center;
the second current collector plate connecting region extends from an outer perimeter of the second current collector plate first connection region;
a planar shape of the second current collector plate second connection region is a circular ring with a center.

11. The secondary battery of any preceding claim, further comprising an insulating plate between the first current collector plate and the second current collector plate.

12. The secondary battery of any preceding claim, further comprising a conductive ring plate attached to the case at a periphery of the rivet terminal.

13. The secondary battery of claim 10, when dependent on claim 6,
wherein the first current collector plate first connection region and the second current collector plate first connection region are at a same plane, and
wherein the first current collector plate second connection region is closer to the electrode assembly than the second current collector plate second connection region.

14. The secondary battery of any preceding claim, wherein the case comprises a rivet plate to which the rivet terminal is coupled, a sidewall integrally extending in a second direction opposite to the first direction from the rivet plate, and a finishing plate closing an end of the sidewall,
and wherein optionally at least one of:
the finishing plate comprises a safety vent;
the finishing plate is fixed to the sidewall by a beading portion and a crimping portion provided on the sidewall;
the finishing plate is fixed to the sidewall by a weld.

15. The secondary battery of any one of claims 1 to 13, wherein the case comprises a rivet plate to which the rivet terminal is coupled, a sidewall welded to the rivet plate and extending in a second direction opposite to the first direction, and a finishing plate integrally extending from the sidewall,
and wherein optionally the finishing plate comprises a safety vent.
